# FASCICULE DE BREVET EUROPEEN

(11) **EP 3 350 016 B1**
(45) Date de publication et mention de la délivrance du brevet: **27.11.2019**
(21) Numéro de dépôt: 16774541.3
(22) Date de dépôt: 15.09.2016
(51) Int. Cl.: B60N 2/22, B60N 2/36

(54) **DISPOSITIF DE VERROUILLAGE BI-POSITIONS D'UN DOSSIER DE SIEGE ARRIERE DE VEHICULE AUTOMOBILE**
VERRIEGELUNGSVORRICHTUNG FÜR ZWEI POSITIONEN EINER HINTERSITZ-RÜCKENLEHNE EINES KRAFTFAHRZEUGS
BI-POSITION LOCKING DEVICE OF A REAR SEAT BACKREST OF AN AUTOMOTIVE VEHICLE

(30) Priorité: 18.09.2015 FR 1558795
(43) Date de publication de la demande: 25.07.2018
(73) Titulaire: PSA Automobiles S.A., 78300 Poissy (FR)
(72) Inventeur: THOMAS, Karen, 91140 Villebon sur Yvette (FR); RAMAHEFASOLO, Justine, 91590 Mondeville (FR); COTTA, Gerald, 78450 Villepreux (FR); PINTO TEIXEIRA, Frederic, 91160 Ballainvilliers (FR)
(86) Numéro de dépôt international: PCT/FR2016/052330
(87) Numéro de publication internationale: WO 2017/046527

(56) Documents cités:
- WO-A1-2011/022714
- DE-A1- 10 159 533
- JP-A- 2003 054 299
- JP-A- 2011 093 340

## Description

### Domaine de l'invention

La présente invention concerne d'une façon générale un dispositif de verrouillage d'un dossier de siège arrière sur la structure d'un véhicule automobile.

Elle vise en particulier un tel dispositif permettant au passager assis sur un tel siège arrière de verrouiller son dossier suivant deux inclinaisons distinctes.

### Arrière-plan de l'invention

Les véhicules automobiles sont généralement équipés en zone arrière de l'habitacle de deux sièges doté d'une assise commune (ou banquette) propre à recevoir plusieurs passagers et dont les dossiers voisins sont rabattables indépendamment l'un de l'autre selon un axe de pivotement transversal afin de permettre une modularité de l'espace de rangement.

Chaque dossier est généralement associé à un dispositif de verrouillage qui est chargé de le solidariser à un élément de structure du véhicule, comme par exemple la traverse de plage arrière, afin d'empêcher qu'il se rabattre sur les passagers en cas de choc du véhicule et sous l'effet des bagages du coffre qui viennent le heurter.

Un tel dispositif de verrouillage est constitué classiquement par un verrou monté sur le dossier et commandé par un organe de déverrouillage, ainsi que par une gâche montée sur la traverse de plage arrière ou tout autre élément de structure du véhicule.

Toutefois, le dossier ne peut-être verrouillée que dans une unique position correspondant à une inclinaison prédéterminée.

Cette non adaptabilité de l'inclinaison du dossier en fonction de la morphologie du passager engendre un manque de confort aux places arrière du véhicule comparativement aux places avant.

Le document FR-A-2 884 771 décrit un dispositif de verrouillage multi-positions d'un dossier de siège arrière de véhicule automobile, comportant un verrou lié au dossier ainsi qu'une gâche liée à la structure du véhicule.

Le verrou comporte un pêne formé d'un fil métallique localement déformable élastiquement pour pouvoir s'engager, en position de verrouillage du dossier, dans un organe d'accroche formé par une encoche réalisée dans la gâche vers son extrémité.

La gâche, qui s'étend dans un plan sensiblement vertical, est montée coulissante dans un logement d'un support de gâche fixe solidaire de la structure du véhicule et selon une course en arc de cercle centrée sur l'axe de pivotement du dossier et correspondant sensiblement à celle du verrou lors de la modification de l'angle d'inclinaison de ce dossier.

Cette gâche est ainsi apte, tout en demeurant en prise avec le verrou, à coulisser dans son support lorsque le dossier passe d'une première configuration d'inclinaison maximale vers l'arrière à une seconde configuration d'inclinaison moindre.

Le dispositif est également doté de moyens de verrouillage comportant un organe de verrouillage constitué par une dent aménagée latéralement sur la gâche et prévue pour s'insérer dans l'un ou l'autre de deux crans ménagés sur le support, de sorte à permettre de verrouiller cette gâche sur son support dans l'une ou l'autre de ses deux positions de fin de course correspondant à ces deux configurations du dossier. La gâche est guidée à coulissement dans le support avec un jeu suffisant, transversalement à la direction de coulissement, pour que la dent puisse être désengagée hors des crans.

Ces moyens de verrouillage comprennent également une came montée pivotante sur le support de gâche et coopérant avec une rainure aménagée dans la gâche.

L'entrainement à pivotement de cette came, via une poignée, la contraint à venir s'appuyer contre le bord supérieur de la rainure ce qui provoque le soulèvement de la gâche transversalement à la direction de coulissement et le dégagement de la dent hors du cran, de sorte à permettre le libre coulissement de cette gâche dans le logement du support. Un ressort monté sur l'axe de pivotement de la came exerce en outre une force de rappel tendant à ramener cette came dans sa position assurant le verrouillage de la gâche.

Un tel dispositif de verrouillage bi-positions nécessite ainsi de soulever la gâche par rapport à son support pour permettre la modification de l'inclinaison du dossier, ce qui entraine un risque de désolidarisation avec le pêne du verrou.

En outre, il ne peut être mis en œuvre avec des gâches dont l'organe d'accroche est formé par une portion radiale d'un fil de gâche prévue pour s'insérer dans un avaloir de réception du verrou et coopérer avec un pêne rotatif.

En effet, le soulèvement de la gâche serait empêché par cet avaloir contre lequel l'extrémité supérieure du fil de gâche viendrait alors buter.

Le document WO 2011022717 décrit un système associé à un siège. Système de verrouillage comprenant: un bras de verrouillage configuré pour engager un percuteur; et un élément de sollicitation ayant une première partie de bobine; dans lequel le bras de verrouillage passe d'une position déverrouillée à une position verrouillée lorsque la première partie de bobine dégage le bras de verrouillage. le bras de verrouillage comprend en outre une fente de percuteur configurée pour recevoir le percuteur, la première partie de bobine se déplaçant à travers l'ouverture de percuteur lorsque la première partie de bobine est désengagée du bras de verrouillage.

### Objet et résumé de l'invention

La présente invention vise donc à palier à ces inconvénients.

Elle propose à cet effet un dispositif de verrouillage bi-positions pour un dossier de siège arrière de véhicule automobile rabattable selon un axe de pivotement transversal, comportant une gâche destinée à être liée à la structure dudit véhicule et comprenant un organe d'accroche destiné à venir en prise avec un pêne compris dans un verrou lié audit dossier pour solidariser ledit dossier à ladite structure du véhicule ;
ladite gâche étant apte, tout en demeurant en prise avec ledit verrou, à coulisser dans un support de gâche destiné à être fixé sur ladite structure selon une course en arc de cercle centrée sur l'axe de pivotement dudit dossier ;
ledit dispositif comportant en outre des moyens de verrouillage de ladite gâche sur ledit support dans l'une ou l'autre de ses deux positions de fin de course correspondant à deux inclinaisons différentes dudit dossier ;
- lesdits moyens de verrouillage comportent un organe de verrouillage monté mobile sur ledit support entre une position de verrouillage dans laquelle il est en prise sur ladite gâche de sorte à la verrouiller sur ledit support, et une position de déverrouillage dans laquelle cet organe est à l'écart de ladite gâche, un organe de verrouillage est constitué par un crochet monté pivotant sur ledit support selon un axe transversal et comportant un jeu d'au moins une dent prévu pour s'insérer dans l'un ou l'autre de deux jeux d'au moins une encoche ménagés sur ladite gâche et espacés d'un secteur angulaire correspondant à la course de coulissement de ladite gâche, caractérisé en ce que lesdits moyens de verrouillage comprennent une came montée pivotante sur ledit support entre une première position dans laquelle elle contraint ledit crochet contre ladite gâche avec sa ou ses dents qui logent dans l'un des deux jeux d'encoches et une seconde position dans laquelle elle n'exerce aucune contrainte sur ledit crochet, lesdits moyens de verrouillage comprennent une tirette de déverrouillage dont l'actionnement est apte à provoquer le pivotement de ladite came vers ladite seconde position, ainsi qu'un organe de rappel élastique apte à entrainer ledit crochet à l'écart de ladite gâche lors de l'actionnement de ladite tirette.

Contrairement au dispositif de l'art antérieur qui nécessite un jeu transversal de la gâche particulièrement important pour entrainer le dégagement de sa dent de verrouillage hors du cran du support et permettre ainsi son coulissement, le dispositif selon l'invention n'impose aucun jeu transversal à la gâche (autre que celui nécessaire à un coulissement de bonne qualité) puisque l'organe de verrouillage est ici monté mobile sur le support et donc indépendant de cette gâche.

Ce dispositif permet ainsi de garantir le maintien de l'organe d'accroche de la gâche en prise avec le pêne du verrou durant toute la phase de coulissement de cette gâche. Il présente également l'avantage d'être compatible avec l'ensemble des types de pênes et d'organes d'accroche connus.

Selon des caractéristiques préférées dudit dispositif de verrouillage :
- ladite gâche comporte une platine présentant au moins une rainure de guidage en arc de cercle centrée sur ledit axe de pivotement du dossier et étant traversée par un doigt de guidage fixé sur ledit support ;
- ladite platine présente deux dites rainures de guidage concentriques et s'étendant sur un même secteur angulaire, chaque dite rainure étant traversée par une tige cylindrique respective ;
- ledit organe d'accroche de ladite gâche est constitué par un brin métallique s'étendant sensiblement radialement audit axe de pivotement du dossier ;
- ledit crochet comporte un jeu de deux dents prévu pour coopérer avec l'un ou l'autre de deux jeux de deux d'encoches ménagés sur ladite gâche et espacés d'un secteur angulaire correspondant à ladite course de coulissement ;
- ledit organe de rappel élastique sollicite également en permanence ladite came vers ladite première position ; et/ou
- lesdits moyens de verrouillage comprennent une targette à ressort de rappel montée sur ledit support et dont une extrémité est apte à venir s'insérer dans l'un ou l'autre de deux encoches ou orifices ménagés dans ladite gâche et espacés d'un secteur angulaire correspondant à la course de coulissement de ladite gâche.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue en perspective d'un siège arrière de véhicule automobile équipé du dispositif de verrouillage bi-positions selon un mode de réalisation préféré de l'invention ;
- la figure 2 est une vue en perspective de trois quart arrière du verrou du dispositif de verrouillage de la figure 1 ; et
- la figure 3 est une vue en perspective de la gâche du dispositif de verrouillage de la figure 1 montée coulissante sur un support destiné à être fixé à la structure dudit véhicule et sur lequel sont articulés les moyens de verrouillage.

### Description détaillée d'un mode préféré de réalisation

Dans la description qui va suivre et par convention, les termes « avant », « arrière » et « transversal» seront définis par rapport à l'orientation habituelle d'un siège monté dans un véhicule automobile.

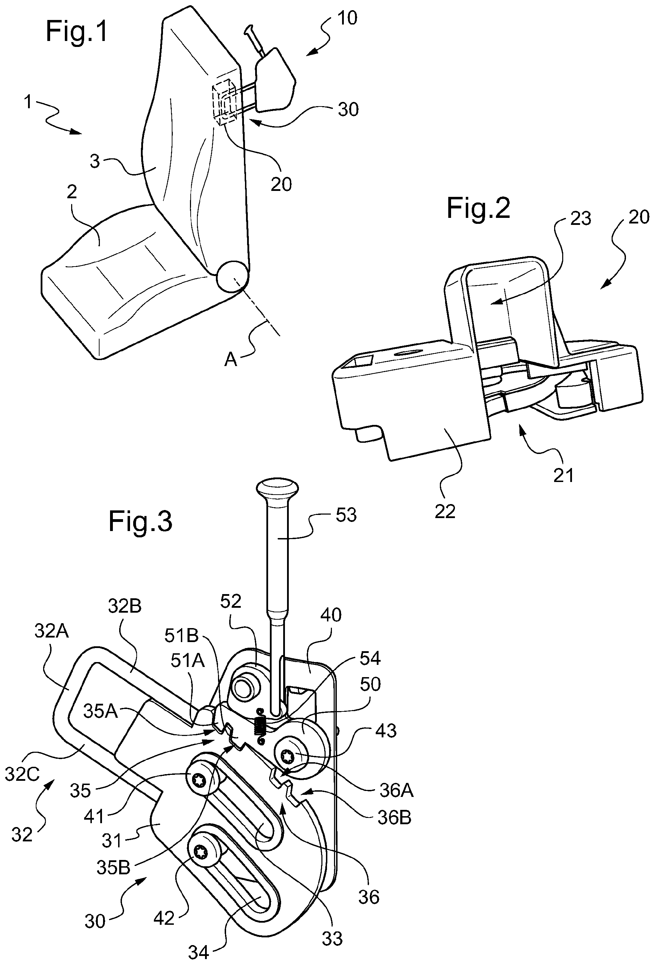

Le siège arrière 1 représenté sur la figure 1 comporte classiquement une assise 2 et un dossier 3 monté pivotant par rapport à cette assise 2 ou à la structure générale du véhicule selon un axe transversal A de manière à pouvoir être rabattu vers l'avant, notamment pour offrir un espace de chargement supplémentaire dans le coffre situé derrière ce dossier.

Le dossier 3 peut être lié rigidement à la structure du véhicule grâce au dispositif de verrouillage 10 suivant une première configuration d'inclinaison maximale vers l'arrière ou suivant une seconde configuration d'inclinaison moindre.

Ce dispositif de verrouillage 10 comporte classiquement un verrou 20 lié à l'armature du dossier ainsi qu'une gâche 30 liée à la structure du véhicule.

Le verrou 20, bien connu en soi et représenté sur la figure 2, comporte un pêne rotatif 21 en forme de fourche s'étendant sensiblement horizontalement à l'intérieur d'un boîtier 22 délimitant un avaloir de réception 23 pour la gâche 30.

Cette gâche 30, représentée sur la figure 3, s'étend suivant un plan sensiblement vertical.

Elle comporte une platine 31 prolongée à l'avant par un fil de gâche métallique 32 en U dont la base 32A, s'étendant sensiblement radialement à l'axe de pivotement A du dossier 3, forme un brin d'accroche destiné à coopérer avec le pêne 21 et dont les deux branches 32B, 32C sont soudées sur la platine 31.

Lors de l'insertion du fil de gâche 32 dans l'avaloir de réception 23 du boîtier 22 du verrou 20, le pêne 21 est entrainé en rotation vers une position fermée dans laquelle il retient la base radiale 32A de ce fil de gâche 32 et verrouille ainsi le dossier 3 sur la structure du véhicule.

Le déverrouillage du dossier 3 est réalisé via un mécanisme non représenté relié au verrou 20 et actionnable par une commande située en partie supérieure du dossier 3, l'actionnement de ce mécanisme ayant pour effet de désengager le pêne 21 du verrou 20 du fil 32 de la gâche 30.

Selon l'invention, la gâche 30 est montée coulissante sur un support de gâche fixe 40, solidaire de la structure de caisse du véhicule (par exemple du cache bagage situé au dos du siège 1), selon une course en arc de cercle centrée sur l'axe de pivotement A du dossier 3 et correspondant sensiblement à celle que parcourt le verrou 20 lors de la modification de l'angle d'inclinaison de ce dossier 3, de sorte à demeurer en prise avec ce verrou durant le déplacement du dossier 3.

Pour ce faire, la platine 31 présente deux rainures de guidage oblongues en arc de cercle 33, 34, concentriques sur l'axe de pivotement A du dossier 3 et s'étendant suivant le même secteur angulaire.

Ces deux rainures 33, 34 sont traversées par deux doigts de guidage formés ici par les tiges cylindriques de deux vis 41, 42 fixées sur le support de gâche 40 et dont les têtes assurent la retenue latérale de la platine 31 contre ce support de gâche 40.

On notera que les tiges des vis 41, 42 présentent un diamètre correspondant sensiblement à la largeur des rainures 33, 34 afin de limiter les jeux.

Outre le fait d'empêcher toute rotation de la gâche 30 sur elle-même, la présence de deux rainures de guidage 41, 42 permet également de renforcer considérablement la résistance mécanique du dispositif de verrouillage 10.

Le bord supérieur de la platine 31 de la gâche 30 présente en outre deux jeux 35, 36 de deux encoches 35A, 35B, 36A, 36B espacés d'un secteur angulaire correspondant à la course de coulissement de la gâche 30.

Le dispositif 10 comporte également des moyens de verrouillage de la gâche 30.

Ces derniers comportent un organe de verrouillage constitué par un crochet 50 monté pivotant sur le support de gâche 40 selon un axe transversal (constitué ici par la tige d'une troisième vis 43 fixée sur ce support 40 dont la tête assure la retenue latérale de ce crochet 50 contre le support 40) entre une position de verrouillage dans laquelle il est en prise sur la gâche 30 de sorte à la verrouiller sur le support de gâche 40 dans l'une ou l'autre de ses deux positions de fin de course correspondant aux deux configurations d'inclinaison du dossier, et une position de déverrouillage dans laquelle il est à l'écart de la gâche 30.

Pour ce faire, le crochet 50 comprend à son extrémité distale un couple de dents 51A, 51B prévu pour coopérer dans sa position de verrouillage avec l'un ou l'autre des deux jeux 35, 36 d'encoches 35A, 35B, 36A, 36B ménagés sur la platine 31.

Les moyens de verrouillage comprennent également une came 52 disposée au dessus du crochet 50 et montée pivotante sur le support de gâche 40 selon un axe transversal, une tirette de déverrouillage 53 liée à la came 52, ainsi qu'un ressort hélicoïdal de traction 54 dont les extrémités sont fixées respectivement sur le crochet 50 et sur la came 52.

La figure 3 montre la gâche 30 verrouillée sur le support 40 dans sa première position de fin de course correspondant à la configuration d'inclinaison maximale du dossier 3 vers l'arrière. La came 52 exerce alors un effort d'appui contre le bord supérieur du crochet 50 contraignant ce dernier contre la platine 31 de la gâche 30 avec ses dents 51A, 51B qui logent dans le premier couple d'encoches 35A, 35B.

Pour passer de cette configuration d'inclinaison maximale à la seconde configuration d'inclinaison moindre du dossier 3, le passager assis sur le siège 1 doit tout d'abord déverrouiller la gâche 30 en tirant sur la tirette 53.

Cette action entraine le pivotement de la came 52 et une diminution du rayon de sa portion située en regard du crochet 50, de sorte que cette dernière ne contraint plus ce crochet 50 contre la platine 31. D'autre part, l'effort de rappel exercé par le ressort 54 entraine ce crochet 50 contre la came 52 à l'écart de la platine 31 ce qui libère ses dents 51A, 51B des encoches 35A, 35B, de sorte que la gâche 30 est désormais libre de coulisser sur le support de gâche fixe 40.

Le passager peut alors faire pivoter manuellement le dossier 3 vers l'avant ce qui entraine le coulissement de la gâche 30 sur le support de gâche fixe 40 tandis que qu'elle reste en prise avec le verrou 20.

Les tiges des deux vis de guidage 41, 42 parcourent alors les deux rainures de guidage 33, 34 jusqu'à venir simultanément buter contre leurs extrémités arrière.

Le dossier 3 atteint alors sa seconde configuration d'inclinaison moindre et le couple de dents 51A, 51B du crochet 50 se trouve désormais en regard du second couple d'encoches 36A, 36B de la platine 31.

Le passager peut alors relâcher la tirette 53 de sorte à provoquer, sous l'effet du ressort 54, le retour de la came 52 dans sa position initiale et l'insertion des dents 51A, 51B du crochet 50 à l'intérieur du second couple d'encoches 36A, 36B de la platine 31.

Le dossier 3 est alors lié rigidement à la structure du véhicule dans cette seconde configuration d'inclinaison moindre avec la gâche 30 qui occupe sa seconde position de fin de course.

Selon des variantes de réalisation non représentées, les moyens de verrouillage sont différents. Par exemple, en lieu et place du crochet 50, de la came 51, de la tirette 53 et du ressort 54, ces derniers comportent une targette à ressort montée sur le support de gâche 40 à l'aplomb de la platine 31 et dont l'extrémité inférieure est apte à venir s'insérer dans l'une ou l'autre de deux encoches ménagées le long du bord supérieur de cette platine 31 et espacées d'un secteur angulaire correspondant à la course de coulissement de la gâche.

Une telle targette pourrait également être montée perpendiculairement à la platine 31 : son extrémité située en regard de cette platine 31 étant alors apte à venir s'insérer dans l'un ou l'autre de deux orifices ménagés dans cette dernière et espacés d'un secteur angulaire correspondant à la course de coulissement de la gâche 30.

Selon d'autres variantes de réalisation non représentées, la platine de la gâche présente une unique rainure de guidage en arc de cercle centrée sur ledit axe de pivotement du dossier. Cette rainure est traversée par un doigt de guidage fixé sur ledit support de gâche et présentant un profil arqué afin d'empêcher la rotation de la gâche sur elle-même.

Bien entendu, la présente invention ne se limite pas aux formes de réalisation décrites et représentées, mais elle englobe toute variante d'exécution à la portée de l'homme du métier, pour autant que l'invention demeure telle que définie par les revendications.

## Revendications

1. Dispositif de verrouillage bi-positions pour un dossier (3) de siège arrière (1) de véhicule automobile rabattable selon un axe de pivotement transversal (A), comportant une gâche (30) destinée à être liée à la structure dudit véhicule et comprenant un organe d'accroche (32A) destiné à venir en prise avec un pêne (21) compris dans un verrou (20) lié audit dossier (3) pour solidariser ledit dossier (3) à ladite structure du véhicule ;
ladite gâche (30) étant apte, tout en demeurant en prise avec ledit verrou (20), à coulisser dans un support de gâche (40) destiné à être fixé sur ladite structure selon une course en arc de cercle centrée sur l'axe de pivotement (A) dudit dossier (3) ;
ledit dispositif comportant en outre des moyens de verrouillage (50, 52, 53, 54) de ladite gâche (30) sur ledit support (40) dans l'une ou l'autre de ses deux positions de fin de course correspondant à deux inclinaisons différentes dudit dossier (3) ;
lesdits moyens de verrouillage comportent un organe de verrouillage (50) monté mobile sur ledit support (40) entre une position de verrouillage dans laquelle il est en prise sur ladite gâche (30) de sorte à la verrouiller sur ledit support (40), et une position de déverrouillage dans laquelle cet organe (50) est à l'écart de ladite gâche (30), ledit organe de verrouillage est constitué par un crochet (50) monté pivotant sur ledit support (40) selon un axe transversal et comportant un jeu d'au moins une dent (51A, 51B) prévu pour s'insérer dans l'un ou l'autre de deux jeux (35, 36) d'au moins une encoche (35A, 35B, 36A, 36B) ménagés sur ladite gâche (30) et espacés d'un secteur angulaire correspondant à la course de coulissement de ladite gâche (30), **caractérisé en ce que** lesdits moyens de verrouillage comprennent une came (52) montée pivotante sur ledit support (40) entre une première position dans laquelle elle contraint ledit crochet (50) contre ladite gâche (30) avec sa ou ses dents (35, 36) qui logent dans l'un des deux jeux (35, 36) d'encoches (35A, 35B, 36A, 36B) et une seconde position dans laquelle elle n'exerce aucune contrainte sur ledit crochet (50), et **en ce que** lesdits moyens de verrouillage comprennent une tirette de déverrouillage (53) dont l'actionnement est apte à provoquer le pivotement de ladite came (52) vers ladite seconde position, ainsi qu'un organe de rappel élastique (54) apte à entrainer ledit crochet (50) à l'écart de ladite gâche (30) lors de l'actionnement de ladite tirette (53).

2. Dispositif de verrouillage bi-positions selon la revendication 1, **caractérisé en ce que** ladite gâche (30) comporte une platine (31) présentant au moins une rainure de guidage en arc de cercle (33, 34) centrée sur ledit axe de pivotement (A) du dossier (3) et étant traversée par un doigt de guidage (41, 42) fixé sur ledit support (40).

3. Dispositif de verrouillage bi-positions selon la revendication 2, **caractérisé en ce que** ladite platine (31) présente deux dites rainures de guidage (33, 34) concentriques et s'étendant sur un même secteur angulaire, chaque dite rainure (33, 34) étant traversée par une tige cylindrique respective (41, 42).

4. Dispositif de verrouillage bi-positions selon l'une des revendications 1 à 3, **caractérisé en ce que** ledit organe d'accroche (32A) de ladite gâche (30) est constitué par un brin métallique s'étendant sensiblement radialement audit axe de pivotement (A) du dossier (3).

5. Dispositif de verrouillage bi-positions selon la revendication 1, **caractérisé en ce que** ledit crochet (50) comporte un jeu de deux dents (51A, 51B) prévu pour coopérer avec l'un ou l'autre de deux jeux (35, 36) de deux d'encoches (35A, 35B, 36A, 36B) ménagés sur ladite gâche et espacés d'un secteur angulaire correspondant à ladite course de coulissement.

6. Dispositif de verrouillage bi-positions selon la revendication 1, **caractérisé en ce que** ledit organe de rappel élastique (54) sollicite également en permanence ladite came (52) vers ladite première position.

7. Dispositif de verrouillage bi-positions selon l'une des revendications 1 à 6, **caractérisé en ce que** lesdits moyens de verrouillage comprennent une targette à ressort de rappel montée sur ledit support et dont une extrémité est apte à venir s'insérer dans l'un ou l'autre de deux encoches ou orifices ménagés dans ladite gâche et espacés d'un secteur angulaire correspondant à la course de coulissement de ladite gâche.

## Patentansprüche

1. Verriegelungsvorrichtung für zwei Positionen für eine Rückenlehne (3) eines Hintersitzes (1) eines Kraftfahrzeugs, die entlang einer Querschwenkachse (A) herunterklappbar ist, die eine Raste (30) umfasst, die dazu bestimmt ist, mit der Struktur des Fahrzeugs verbunden zu sein, und ein Anhängorgan (32A) umfasst, das dazu bestimmt ist, in einen Riegel (21) einzugreifen, der in dem Schloss (20) enthalten ist, das mit der Rückenlehne (3) verbunden ist, um die Rückenlehne (3) mit der Struktur des Fahrzeugs fest zu verbinden;
wobei die Raste (30) geeignet ist, während sie gleichzeitig im Eingriff mit dem Riegel (20) bleibt, in einem Rastenträger (40), der dazu bestimmt ist, auf der Struktur befestigt zu sein, gemäß einem bogenförmigen Verlauf, der auf der Schwenkachse (A) der Rückenlehne (3) zentriert ist, zu gleiten;
wobei die Vorrichtung außerdem Verriegelungsmittel (50, 52, 53, 54) der Raste (30) auf dem Träger (40) in der einen oder der anderen ihrer zwei Endstellungspositionen, die zwei unterschiedlichen Schräglagen der Rückenlehne (3) entsprechen, umfasst; wobei die Verriegelungsmittel ein Verriegelungsorgan (50) umfassen, das auf dem Träger (40) zwischen einer Verriegelungsposition, in der es im Eingriff auf der Raste (30) derart ist, dass der Träger (40) verriegelt ist, und einer Entriegelungsposition, in der dieses Organ (50) von der Raste (30) beabstandet ist, beweglich montiert ist, wobei das Verriegelungsorgan aus einem Haken (50) besteht, der auf dem Träger (40) um eine Querachse schwenkend montiert ist und einen Satz aus mindestens einem Zahn (51A, 51B) umfasst, der vorgesehen ist, um sich in den einen oder den anderen von zwei Sätzen (35, 36) aus mindestens einer Kerbe (35A, 35B, 36A, 36B) zu fügen, die auf der Raste (30) eingerichtet und um einen Winkelsektor beabstandet sind, der dem Gleithub der Raste (30) entspricht, **dadurch gekennzeichnet, dass** die Verriegelungsmittel einen Nocken (52) umfassen, der auf dem Träger (40) zwischen einer ersten Position, in der er den Haken (50) gegen die Raste (30) mit seinem oder seinen Zähnen (35, 36), die in einem der zwei Sätze (35, 36) von Kerben (35A, 35B, 36A, 36B) aufgenommen sind, spannt, und einer zweiten Position, in der er keine Belastung auf dem Haken (50) ausübt, schwenkend montiert ist, und dass die Verriegelungsmittel ein Entriegelungszugelement (53) umfassen, dessen Betätigung geeignet ist, das Schwenken des Nockens (52) zu der zweiten Position zu bewirken, sowie ein elastisches Rückstellorgan (54), das geeignet ist, den Haken (50) bei der Betätigung des Entriegelungszugelements (53) zur Beabstandung von der Raste (30) anzutreiben.

2. Verriegelungsvorrichtung für zwei Positionen nach Anspruch 1, **dadurch gekennzeichnet, dass** die Raste (30) eine Platte (31) umfasst, die mindestens eine Führungsrille im Kreisbogen (33, 34) aufweist, die auf der Schwenkachse (A) der Rückenlehne (3) zentriert ist und von einem Führungsfinger (41, 42), der auf dem Träger (40) befestigt ist, durchquert wird.

3. Verriegelungsvorrichtung für zwei Positionen nach Anspruch 2, **dadurch gekennzeichnet, dass** die Platte (31) zwei konzentrische Führungsrillen (33, 34) aufweist, die sich auf demselben Winkelsektor erstrecken, wobei jede Rille (33, 34) von einem jeweiligen zylindrischen Schaft (41, 42) durchquert ist.

4. Verriegelungsvorrichtung für zwei Positionen nach einem der Ansprüche 1 bis 3, **dadurch gekennzeichnet, dass** das Anhängorgan (32A) der Raste (30) aus einem Metallteil besteht, das sich im Wesentlichen radial zu der Schwenkachse (A) der Rückenlehne (3) erstreckt.

5. Verriegelungsvorrichtung für zwei Positionen nach Anspruch 1, **dadurch gekennzeichnet, dass** der Haken (50) einen Satz aus zwei Zähnen (51A, 51B) umfasst, der dazu vorgesehen ist, mit dem einen oder dem anderen der zwei Sätze (35, 36) von zwei Kerben (35A, 35B, 36A, 36B), die auf der Raste eingerichtet und um einen Winkelsektor beabstandet sind, der dem Gleithub entspricht, zusammenzuwirken.

6. Verriegelungsvorrichtung für zwei Positionen nach Anspruch 1, **dadurch gekennzeichnet, dass** das elastische Rückstellorgan (54) auch ständig den Nocken (52) zu der ersten Position beansprucht.

7. Verriegelungsvorrichtung für zwei Positionen nach einem der Ansprüche 1 bis 6, **dadurch gekennzeichnet, dass** die Verriegelungsmittel einen Schubriegel mit Rückstellfeder umfassen, der auf dem Träger montiert ist, und von dem ein Ende geeignet ist, sich in die eine oder die andere von zwei Kerben oder Öffnungen zu fügen, die in der Raste eingerichtet und um einen Winkelsektor, der dem Gleithub der Raste entspricht, beabstandet sind.

## Claims

1. A bi-position locking device for a backrest (3) of a rear seat (1) of an automotive vehicle that can be folded about a transverse pivoting axis (A), comprising a strike (30) intended to be linked to the structure of the said vehicle and including an attachment member (32A) intended for engaging with a bolt (21) comprised in a lock (20) linked to said backrest (3) for securing said backrest (3) to said structure of the vehicle;
said strike (30) being able, whilst remaining engaged with said lock (20), to slide in a strike support (40) intended to be fixed on said structure along an arc-shaped course centred on the pivoting axis (A) of said backrest (3);
said device further comprising locking means (50, 52, 53, 54) of said strike (30) on said support (40) in one or other of its two end-of-travel positions corresponding to two different inclinations of said backrest (3);
said locking means comprise a locking member (50) movably mounted on said support (40) between a locking position in which it is engaged on said strike (30) so as to lock it on said support (40), and an unlocking position in which this member (50) is separated from said strike (30), said locking member is constituted by a hook (50) pivotally mounted on said support (40) along a transverse axis and comprising a set of at least one tooth (51A, 51B) provided to be inserted in the one or the other of two sets (35, 36) of at least one notch (35A, 35B, 36A, 36B) arranged on said strike (30) and separated by an angular sector corresponding to the sliding course of said strike (30),
**characterized in that**
said locking means include a cam (52) pivotally mounted on said support (40) between a first position in which it forces said hook (50) against said strike (30) with its tooth or teeth (35, 36) which are housed in one of the two sets (35, 36) of notches (35A, 35B, 36A, 36B) and a second position in which it does not exert any force on said hook (50), and
**in that** said locking means include an unlocking pull (53), the actuation of which is able to cause the pivoting of said cam (52) towards said second position, and also an elastic return means (54) able to entrain said hook (50) apart from said strike (30) during the actuation of said pull (53).

2. The bi-position locking device according to Claim 1, **characterized in that** said strike (30) comprises a plate (31) having at least one arc-shaped guide groove (33, 34) centred on said pivoting axis (A) of the backrest (3) and being passed through by a guide finger (41, 42) fixed on said support (40).

3. The bi-position locking device according to Claim 2, **characterized in that** said plate (31) has two said guide grooves (33, 34) which are concentric and extending over the same angular sector, each said groove (33, 34) being passed through by a respective cylindrical rod (41, 42).

4. The bi-position locking device according to one of Claims 1 to 3, **characterized in that** said attachment member (32A) of said strike (30) is constituted by a metal strip extending substantially radially to said pivoting axis (A) of the backrest (3).

5. The bi-position locking device according to Claim 1, **characterized in that** said hook (50) comprises a set of two teeth (51A, 51B) provided for cooperating with one or other of two sets (35, 36) of two notches (35A, 35B, 36A, 36B) arranged on said strike and separated by an angular sector corresponding to said sliding course.

6. The bi-position locking device according to Claim 1, **characterized in that** said elastic return member (54) also permanently urges said cam (52) towards said first position.

7. The bi-position locking device according to one of Claims 1 to 6, **characterized in that** said locking means include a catch with return spring, mounted on said support and one end of which is able to come to be inserted in the one or the other of two notches or orifices arranged in said strike and separated by an angular sector corresponding to the sliding course of said strike.
